# EUROPEAN PATENT SPECIFICATION

(11) **EP 1 707 521 B1**
(45) Date of publication and mention of the grant of the patent: **03.06.2009**
(21) Application number: 06006527.3
(22) Date of filing: 29.03.2006
(51) Int. Cl.: B65H 37/00

(54) **Adhesive tape joining method and apparatus**
Verfahren und Montagevorrichtung zum Befestigen von Klebeband
Procédé et dispositif de fixation de bande adhésive

(30) Priority: 01.04.2005 JP 2005106291
(43) Date of publication of application: 04.10.2006
(73) Proprietor: NITTO DENKO CORPORATION, Ibaraki-shi, Osaka 567-8680 (JP)
(72) Inventor: Degawa, Osamu, Ibaraki-shi, Osaka 567-8680 (JP); Kinpara, Kazuhiko, Ibaraki-shi, Osaka 567-8680 (JP); Ikishima, Shinsuke, Ibaraki-shi, Osaka 567-8680 (JP)
(74) Representative: Hauck Patent- und Rechtsanwälte

(56) References cited:
- PATENT ABSTRACTS OF JAPAN vol. 2000, no. 17, 5 June 2001 (2001-06-05) -& JP 09 132218 A (MINNESOTA MINING & MFG CO <3M>), 20 May 1997 (1997-05-20)
- PATENT ABSTRACTS OF JAPAN vol. 2002, no. 10, 10 October 2002 (2002-10-10) -& JP 2002 167110 A (THREE M INNOVATIVE PROPERTIES CO), 11 June 2002 (2002-06-11)
- PATENT ABSTRACTS OF JAPAN vol. 2002, no. 11, 6 November 2002 (2002-11-06) & JP 2002 211832 A (KANSAI PAINT CO LTD), 31 July 2002 (2002-07-31)

## Description

### BACKGROUND OF THE INVENTION

### (1) Field of the Invention

The present invention relates to an adhesive tape joining method used when an adhesive tape is joined to a workpiece such as a door sash or the like of an automobile, and an adhesive tape joining jig using this method.

### (2) Description of the Related Art

In recent years, in a manufacturing process of an automobile, in place of black coating processing on a door sash, a technology to join a black adhesive tape has been developed. Using this technology, the black and wide adhesive tape is joined along a main side face that is an exterior of a workpiece, and then, the protruded portion of the adhesive tape is folded back and joined along the edge side of the workpiece.

According to the means for folding back and joining the protruded portion of the adhesive tape along the edge side of the workpiece, for example, joining is carried out while manually pushing a jig main body engaged with and guided to the workpiece along the workpiece. Specifically, it is suggested that a front-and-back pair of rollers formed in the shape of a hand drum that is provided to the jig main body is rolled and pressed on a top face and a rear face at the edge side of the workpiece (refer to JP-A 2002-211832).

However, in the above-described joining means, one place in a circumferential direction in the hand-drum shaped roller is opposed to the top face and the back face of the edge side, so that pressing the protruded portion of the adhesive tape on the top face of the edge side and pressing the folded tape portion on the back face of the edge side are carried out at the same time. Accordingly, when a head roller presses the protruded portion of the adhesive tape at first, the adhesive tape is joined on the back face until air tangled inward in accordance with folding of the tape has completely escaped. As a result, this involves a problem such that air bubble remains near the top of the edge side.

Such a phenomenon becomes remarkable the more the jig is quickly moved forward. In addition, in order to remove remaining of air bubble due to tangling, it is necessary to slowly move the jig forward and to secure a time for air relief. In other words, according to the conventional joining means, it is not possible to move the jig forward too quickly, and this leads to a disadvantage that the improvement of the operating efficiency is difficult.

From JP 2002 167110 a sticking jig including a jig body, a tape sticking head mounted on the jig body and a jig guide are known. The known tape sticking head is horizontally moved on a slide member attached to the jig body and a position relationship between the tape sticking head and the jig guide can be adjusted.

Further, from JP 09132218 a folding and sticking tool is known. The sticking tool is provided with a tool body made of an L-shaped plastic thin plate and a guide forming means in which a guide space can be formed due to the deformation, in the inner wall thereof. An inner wall of the folding and sticking tool is positioned to contact the end of an objective and a pusher is pushed down and fixed by a stopper. The tool is then slid towards the terminal end of the applied part of tape so as to fit the applied part to the objective.

### SUMMARY OF THE INVENTION

The present invention has been made taking the foregoing problems into consideration, and an object thereof is to provide an adhesive tape joining method that can fold back and join an adhesive tape to an edge side with high efficiency without generating remaining of air bubble due to tangling, and an adhesive tape joining jig using this method.

In order to attain such an object, the present invention employs the following configuration.

An adhesive tape joining method for folding back a protruded portion of an adhesive tape joined on an adhesive tape joining target face of a workpiece along an edge side of the workpiece and joining the protruded portion to the workpiece, the method comprising the steps of:
engaging and guiding a jig main body with and to the edge side of the workpiece to move the jig main body along the workpiece; and
folding back the tape portion protruded from the workpiece while pressing the tape portion by a first pressing part provided to the jig main body prior to a top of the edge side and, then, pressing the folded tape portion against a back face of the edge side by a second pressing part provided to the jig main body.

According to the adhesive tape joining method of the present invention, the protruded tape portion is folded back while being pressed prior to the top of the edge side by the first pressing part. Therefore, the tangled air is discharged from the top to the back face side of the edge side. Then, the folded tape portion is joined to the back face of the edge side by the second pressing part, so that air discharged to the back face side is pushed out from the joined face outside to be removed. In other words, the folding back and joining are carried out without remaining of air bubble.

In this case, despite of the forward moving speed of the jig main body, pushing out and removing of air bubble from the top of the edge side is always prioritized. As a result, even if the jig main body is quickly moved forward, it is possible to efficiently fold back and join the tape with no air bubble remained due to tangling.

As a specific joining method, the followings are considered.

First, a guide pressing part provided to the jig main body is engaged with and acted on an adhesive tape joining target face of the workpiece and, also, this guide pressing part and the second pressing part are displaced in the back and forth in the direction of moving the jig to sandwich and press the edge side of the workpiece from the both sides.

Second, the jig main body is provided with a guide groove that is externally fitted to and engaged with the edge side, this guide groove has a narrow constricted part at the back-and-forth middle part, and the guide groove is formed in the shape of a hand drum that is opened with its back-and-forth part widened, the bottom face of the guide groove is made into the first pressing part, and this first pressing part is engaged with and acted on the adhesive tape joining target face of the workpiece, one of the groove inside faces at the front part of the constricted part is made into the guide pressing part, and the guide pressing part and the second pressing part are displaced in the back and forth in the direction of moving the jig to sandwich and press the edge side of the workpiece from the both sides.

According to the first method, the second pressing part is pressed on the back face of the edge side of the workpiece and the jig main body is moved forward in a forward direction with a twisting force given thereto so that the guide pressing part is pressed against the target face of the workpiece. In other words, the workpiece is sandwiched from the opposite faces and even and well-finished joining can be continuously carried out while maintaining the jig main body at a stable posture and smoothly moving it.

In addition, in order to attain such an object, the present invention may be configured as follows.

An adhesive tape joining jig for convoluting a protruded portion of an adhesive tape joined to an adhesive tape joining target face of a workpiece along an edge side of the workpiece and joining the protruded portion to the workpiece, the jig comprising:
a first pressing part opposed to a top of an edge side, which manually moves a jig main body along the edge side being engaged with the edge side of the workpiece;
a second pressing part opposed to a back face of the edge side of the workpiece; and
a guide pressing part opposed to the adhesive tape joining target face of the workpiece, wherein
the first pressing part and the guiding pressing part are arranged at the part of the direction of moving the jig ahead of the second pressing part.

According to the adhesive tape joining jig of the present invention, it is possible to preferably practice the above-described method of the invention.

Preferably, the jig main body is provided with a guide groove externally fitted to and engaged with the edge side, this guide groove has a narrow constricted part at the back-and-forth middle part, and the guide groove is formed in the shape of a hand drum that is opened with its back-and-forth part widened, the bottom face of the guide groove is formed on the first pressing part, one of the groove inside faces at the front part of the constricted part is formed on the guide pressing part, and the other of the groove inside faces at the rear part of the constricted part is formed on the second pressing part.

According to this structure, only by forming a groove shaped in a hand drum on one face of the jig main body shaped in a block made of, for example, a hard resin material, it is possible to inexpensively manufacture the adhesive tape joining jig by which the above-described method can be practiced by a very simple structure without no roller and no spindle. In other words, this adhesive tape joining jig is very excellent in a practical advantage.

In addition, preferably, the jig main body is provided with a guide groove externally fitted to and engaged with the edge side, this guide groove has a narrow constricted part at the back-and-forth middle part, and the guide groove is formed in the shape of a hand drum that is opened with its back-and-forth part widened, the bottom face of the guide groove is made into the first pressing part, further, one of the groove inside faces at the front part of the constricted part is made into a guiding roller that can freely idle, the other of the groove inside faces at the rear part of the constricted part is provided with a rear part roller that can freely idle, and the guiding roller and the rear part roller are displaced in the back and forth in the direction of moving the jig to sandwich and press the edge side of the workpiece from the both sides.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a perspective view seen from the side of a joining operation face of an adhesive tape joining jig;
Fig. 2 is a perspective view showing a workpiece and the adhesive tape joining jig;
Fig. 3 is perspective view showing a folding back and joining step;
Fig. 4 is a cross sectional view of a substantial part that is prepared for joining;
Fig. 5 is a cross sectional view of a folding back and joining step;
Fig. 6 is a sectional view taken along an X-X line in Fig. 5; and
Fig. 7 is a plan view of a jig according to a modification.

### DESCRIPTION OF THE PREFERRED EMBODIMENTS

Embodiments of the present invention will be described below with reference to the drawings.

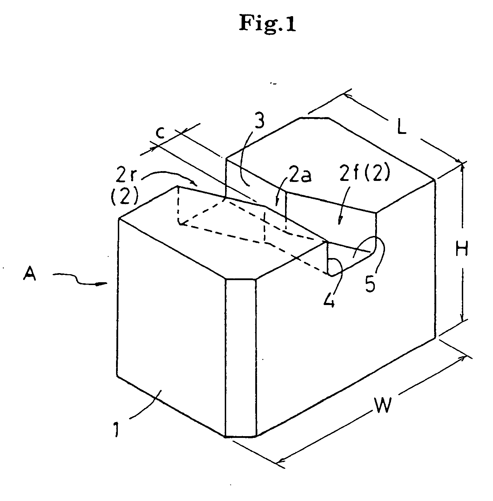

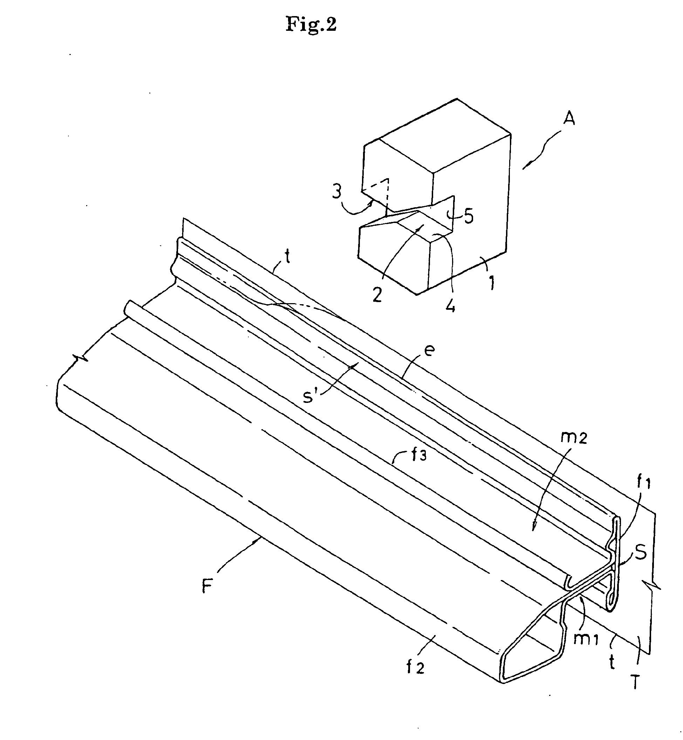

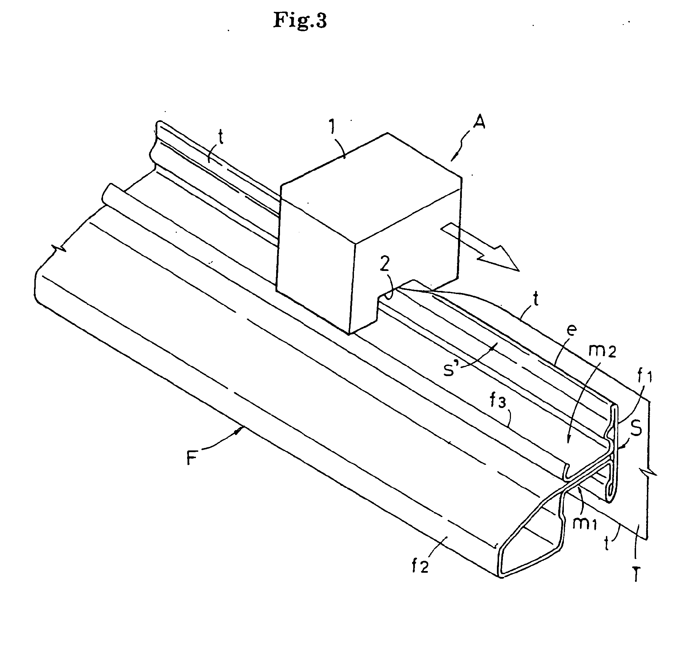

Fig. 1 is a perspective view of an adhesive tape joining jig A according to the present invention, Fig. 2 is a perspective view of a workpiece F and the adhesive tape joining jig A, and Figs. 3 to 6 are perspective views each showing a step of folding back an adhesive tape T and joining the adhesive tape T to the workpiece F.

Herein, the workpiece F according to this embodiment is a door sash in an automobile, and in place of black coating processing, a black adhesive tape T is joined on a main side face S that is an exterior of the workpiece F.

The workpiece F, as shown in Fig. 2, is configured by press polymerization of a single steel plate. This workpiece F has an outer frame f₁ shaped in a longitudinal wall at the lateral outside that is the outer face of the door, and the workpiece F is formed with a section that a hollow lateral frame f₂ thrusting from this outer frame f₁ toward the inside of the door is connected.

Then, between a hollow region of the lateral frame f₂ and the outer frame f₁, a window glass mounting groove m₁ is formed. In addition, at right and left middle region of the outer face of the lateral frame f₂ (the upper face in the drawing), a lib f₃ is protruded along the longitudinal direction of the workpiece. Between this lib f₃ and the outer frame f₁, a weather strip mounting groove m₂ is formed. Then, a main side face S of the outer frame f₁ becomes a tape joining face.

As the adhesive tape T, an adhesive tape with a separator that is wider than the tape joining face S is used. This adhesive tape T is joined to the tape joining face S being positioned so as to protrude from upper and lower edge sides e at the outer frame f₁ by several mm, respectively. Further, for joining the adhesive tape onto this tape joining face S, a joining jig for exclusive use is used, and the tape is joined manually.

A tape portion t protruded from the tape joining face S is folded back along the edge side e in a subsequent step to be joined to its back face s'. This folding and joining will be made by using the adhesive tape joining jig A according to the present invention as follows.

As shown in Fig. 1, a jig main body 1 of the adhesive tape joining jig A is formed by a hard resin material that is excellent in a slipping property. The jig main body 1 is formed in a block with a cross direction length L, about 20 mm; a right and left width W, about 30 and some mm; and a height H, about 20 and some mm. At its joining operation face (the lower face in Fig. 3), a guide groove 2 of a depth several mm across the back-and-forth of the main body 1 is formed. Further, in the adhesive tape joining jig A, the face contacting the adhesive tape T may be excellent in a slipping property. For example, fluorine coating may be applied on the jig main body, or the jig main body itself may be configured by a fluorine resin.

This guide groove 2 has a narrow constricted part 2a at the back-and-forth middle part, and the guide groove 2 is formed in the shape of a hand drum that is opened with its back-and-forth part widened. In addition, one inside face 3 of a widened groove 2r at the rear part of the constricted part 2a and the other inside face 4 of a widened groove 2f at the front part of the constricted part 2a are formed in parallel each other along the back-and-front direction, respectively. In addition, an interval c between these both inside faces 3 and 4, namely, the right and left directional interval of the constricted part 2a is set to be a measurement adding twice of the tape thickness to the thickness of the edge side e, or to be slightly larger than this measurement.

Then, a bottom face 5 of the guide groove 2 is formed at the first pressing part opposed to the top of the edge side e of the workpiece F, the inside face 3 at the rear side is formed at the second pressing part opposed to the back face s' of the edge side e, and the inside face 4 of the front side is formed at the guide pressing part opposed to the joining face S of the workpiece F.

The adhesive tape joining jig A is configured as follows and it is used in the following manner.

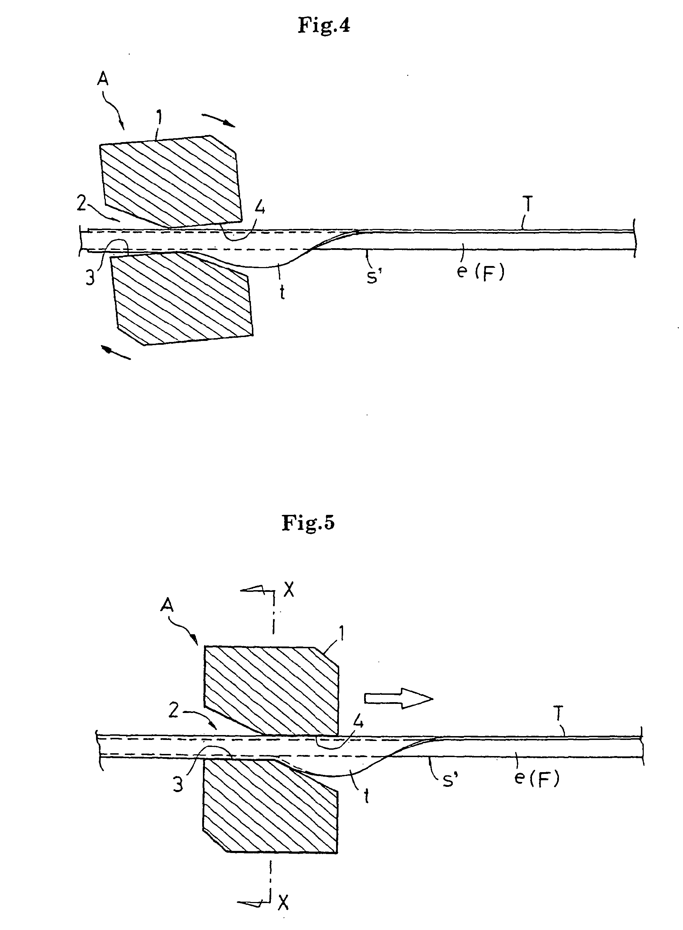

At first, as a joining preparation step, the tape portion t joined to the joining face S of the workpiece and protruded from the edge side e is folded back manually at its one end in the tape longitudinal direction to be partially joined to the back face of the edge side. The jig main body 1 of the adhesive tape joining jig A is externally fitted to and engaged with this joining portion via the guide groove 2. In this case, as shown in Fig. 4, the main body 1 is comfortably engaged with the joining portion being tilted in the back-and-forth direction so that the pressing load is not applied to the edge side e.

Next, by carrying out the twisting operation in a direction shown by an arrow in Fig. 4 of the jig main body 1, as shown in Fig. 5, the back-and-forth place of the edge side e is sandwiched from right and left by the front guide pressing part 4 and the rear second pressing part 3. In this case, the right and left posture of the jig main body 1 is stably held into the posture that is at right angles to the longitudinal direction of the workpiece F. Due to this operation, the folded tape portion t is pressed against the back face s' of the edge side e by the second pressing part 3.

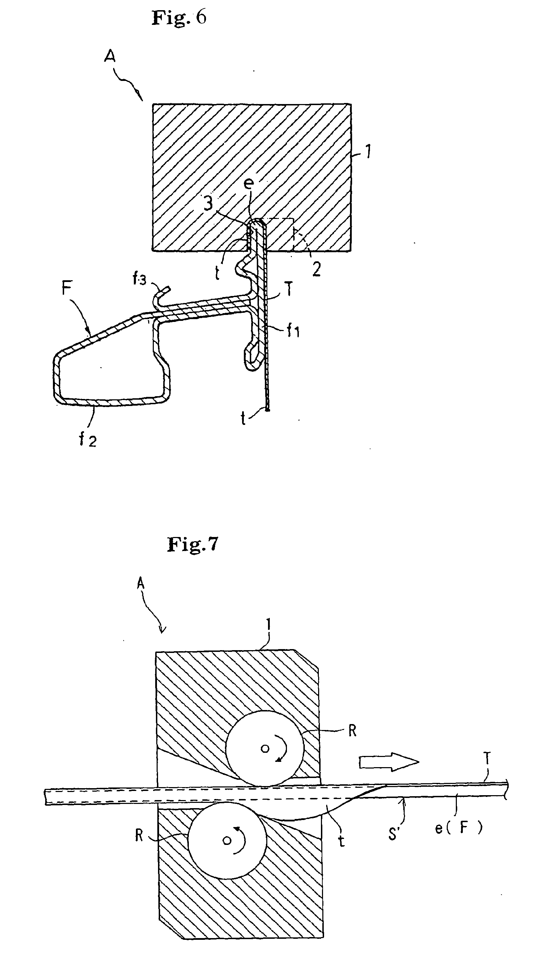

Thus, when the joining preparation is completed, as shown in Fig. 3, pressing down the jig main body 1 and pressing the first pressing part (the bottom face of the guide groove 2) 5 on the top of the edge side e, the main body 1 is pressed forward with the twisting operation shown in Fig. 4 added. Following to this operation, at first, a base part of the folded tape portion t is joined at the top of the edge side e by the first pressing part 5 at the front part from the constricted part 2a. Then, in accordance with the forward movement, the folded-back state of the tape portion t becomes gradually strong inside of the widened groove 2f to be made into a posture along the back face s' of the edge side e. In addition, at the rear part of the constricted part 2a, as shown in Fig. 6, the tape portion t is pressed on the back face s' of the edge side e by the second pressing 3 to be joined thereto.

In this case, since the tape portion t is pressed prior to the top of the edge side e by the first pressing part 5, air tangled into the side of the joined face in accordance with folding of the tape is pushed out to the side of the back face s' of the edge side e to be removed. After that, by firmly joining the folded tape portion t on the back face s' of the edge side e by the second pressing part 3, the folding and joining without remaining of air bubble will be performed.

Further, the present invention can be also made in the following manners.
(1) According to the above-described embodiment, the first pressing part 5, the second pressing part 3, and the guide pressing part 4 are configured by a flat inner face at the guide groove 2, respectively, however, as shown in Fig. 7, these pressing parts also can be configured by a roller R that can freely idle. According to this structure, the main body 1 can be smoothly moved manually with a less movement resistance. The roller R of the front part of the moving direction is equivalent to the guiding roller of the present invention, and the roller R at the rear part is equivalent to the rear part roller of the present invention.
(2) The main body 1 is configured by a right and left pair of blocks, the guide groove 2 is formed between the opposed regions thereof, and the gap between the guide groove 2 and the block can be adjusted by approaching or separating the both blocks. This makes it possible to correspond to the workpiece F with different thicknesses of the edge side e.

The present invention may be embodied in other specific forms without departing from the essential attributes thereof and, accordingly, reference should be made to the appended claims, rather than to the foregoing specification, as indicating the scope of the invention.

## Claims

1. An adhesive tape joining method for folding back a protruded portion of an adhesive tape joined on an adhesive tape joining target face of a workpiece along an edge side of the workpiece and joining the protruded portion to the workpiece, the method comprising the steps of:
engaging and guiding a jig main body with and to the edge side of the workpiece to move the jig main body along the workpiece; and
folding back the tape portion protruded from the workpiece while pressing the tape portion by a first pressing part provided to the jig main body prior to a top of the edge side and, then, pressing the folded tape portion against a back face of the edge side by a second pressing part provided to the jig main body, wherein
a guide pressing part provided to the jig main body is engaged with and acted on an adhesive tape joining target face of the workpiece,
**characterized in that**
this guide pressing part (4) and the second pressing part (3) are displaced in the back and forth in the direction of moving the jig (A) to sandwich and press the edge side (e) of the workpiece (F) from the both sides,
and **in that**
the jig main body (1) is provided with a guide groove (2) that is externally fitted to and engaged with the edge side (e), this guide groove (2) has a narrow constricted part (2a) at the back-and-forth middle part, and the guide groove (2) is formed in the shape of a hand drum that is opened with its back-and-forth part widened,
the bottom face (5) of the guide groove (2) is made into the first pressing part (5), and this first pressing part (5) is engaged with and acted on the adhesive tape joining target face of the workpiece (F),
one of the groove inside faces (4) at the front part of the constricted part (2a) is made into the guide pressing part (4).

2. An adhesive tape joining jig for convoluting a protruded portion of an adhesive tape joined to an adhesive tape joining target face of a workpiece along an edge side of the workpiece and joining the protruded portion to the workpiece, the jig comprising:
a first pressing part opposed to a top of an edge side of the workpiece, which manually moves a jig main body along the edge side being engaged with the edge side of the workpiece;
a second pressing part opposed to a back face of the edge side of the workpiece; and
a guide pressing part opposed to the adhesive tape joining target face of the workpiece, **characterized in that**
the first pressing part (5) and the guiding pressing part (4) are arranged ahead of the second pressing part (3) in the direction of moving the jig (A)
and **in that**
the jig main body (1) is provided with a guide groove (2) externally fitted to and engaged with the edge side (e), this guide groove (2) has a narrow constricted part (2a) at the back-and-forth middle part, and the guide groove (2) is formed in the shape of a hand drum that is opened with its back-and-forth part widened,
the bottom face (5) of the guide groove (2) is formed on the first pressing part (5),
one of the groove inside faces (4) at the front part of the constricted part (2a) is formed on the guide pressing part (4), and
the other of the groove inside faces (3) at the rear part of the constricted part (2a) is formed on the second pressing part (3).

3. The adhesive tape joining jig according to claim 2, wherein the jig main body (1) is configured by a pair of blocks,
a guide groove (2) to be externally fitted to and engaged with the edge side (e) is formed at a region where the pair of blocks are opposed each other, and
further, by approaching and separating the pair of blocks, an interval of the guide groove (2) can be adjusted.

4. The adhesive tape joining jig according to claim 2, wherein the jig main body (1) is formed by a fluorine resin.

5. The adhesive tape joining jig according to claim 2, wherein the surface of the guide groove (2) is coated with a fluorine resin.

6. An adhesive tape joining jig for convoluting a protruded portion of an adhesive tape joined to an adhesive tape joining target face of a workpiece along an edge side of the workpiece and joining the protruded portion to the workpiece, the jig comprising:
a first pressing part opposed to a top of an edge side of the workpiece, which manually moves a jig main body along the edge side being engaged with the edge side of the workpiece;
a second pressing part opposed to a back face of the edge side of the workpiece; and
a guide pressing part opposed to the adhesive tape joining target face of the workpiece, wherein
the first pressing part (5) and the guiding pressing part (4) are arranged ahead of the second pressing part (3) in the direction of moving the jig (A)
**characterized in that**
the jig main body (1) is provided with a guide groove (2) externally fitted to and engaged with the edge side (e), this guide groove (2) has a narrow constricted part (2a) at the back-and-forth middle part, and the guide groove (2) is formed in the shape of a hand drum that is opened with its back-and-forth part widened,
the bottom face (5) of the guide groove (2) is made into the first pressing part (5),
further, one of the groove inside faces at the front part of the constricted part is made into a guiding roller (R) that can freely idle,
the other of the groove inside faces at the rear part of the constricted part (2a) is provided with a rear part roller (R) that can freely idle, and
the guiding roller (R) and the rear part roller (R) are displaced in the back and forth in the direction of moving the jig (A) to sandwich and press the edge side (e) of the workpiece (F) from the both sides.

7. The adhesive tape joining jig according to claim 6, wherein the jig main body (1) and the both rollers (R) are formed by a fluorine resin.

8. The adhesive tape joining jig according to claim 6, wherein the surface of the guide groove (2) and the surfaces of the both rollers (R) are coated with a fluorine resin.

## Patentansprüche

1. Verfahren zum Befestigen von Klebeband zum Zurückfalten eines vorstehenden Abschnitts eines Klebebands, das an einer Klebebandbefestigungs-Zielfläche eines Werkstücks entlang einer Kantenseite des Werkstücks befestigt ist, und zum Befestigen des vorstehenden Abschnitts am Werkstück, wobei das Verfahren die folgenden Schritte umfasst:
Eingreifen und Führen eines Montagevorrichtungshauptkörpers mit und zur Kantenseite des Werkstücks, um den Montagevorrichtungshauptkörper entlang dem Werkstück zu bewegen; und
Zurückfalten des Bandabschnitts, der von dem Werkstück hervorsteht, während der Bandabschnitt von einem ersten Druckteil gedrückt wird, das an dem Montagevorrichtungshauptkörper vor einem Oberteil der Kantenseite vorgesehen ist, und dann, Drücken des gefalteten Bandabschnitts gegen eine Rückfläche der Kantenseite durch ein zweites Druckteil, das an dem Montagevorrichtungshauptkörper vorgesehen ist, wobei
ein Führungsdruckteil, das an dem Montagevorrichtungshauptteil vorgesehen ist, mit einer Klebebandbefestigungs-Zielfläche des Werkstücks in Eingriff gebracht und darauf zum Wirken gebracht wird,
**dadurch gekennzeichnet, dass**
dieses Führungsdruckteil (4) und das zweite Druckteil (3) hinten und vom in Bewegungsrichtung der Montagevorrichtung (A) verschoben werden, um die Kantenseite (e) des Werkstücks (F) von beiden Seiten einzuschließen,
und **dadurch**, dass
der Montagevorrichtungshauptkörper (1) mit einer Führungsnut (2) versehen ist, die extern an der Kantenseite (e) angebracht und mit ihr in Eingriff ist, wobei diese Führungsnut (2) einen schmalen eingeengten Teil (2a) am hinteren und vorderen Mittelteil aufweist, und die Führungsnut (2) in Form einer Handtrommel geformt ist, die bei geweitetem hinterem und vorderen Teil geöffnet wird,
die untere Fläche (5) der Führungsnut (2) im ersten Druckteil (5) ausgeführt ist und das erste Druckteil (5) mit der Klebebandbefestigungs-Zielfläche des Werkstücks (F) in Eingriff gebracht und auf ihr zum Wirken gebracht wird,
eine der Nutinnenflächen (4) am Vorderteil des eingeengten Teils (2a) im Führungsdruckteil (4) ausgeführt ist.

2. Klebebandbefestigungs-Montagevorrichtung zum Einrollen eines vorstehenden Abschnitts eines Klebebands, das an einer Klebebandbefestigungs-Zielfläche eines Werkstücks entlang einer Kantenseite des Werkstücks befestigt ist, und zum Befestigen des vorstehenden Abschnitts an dem Werkstück, wobei die Montagevorrichtung umfasst:
ein erstes Druckteil, das einem Oberteil einer Kantenseite des Werkstücks gegenüberliegt, das einen Montagevorrichtungshauptkörper entlang der Kantenseite, die mit der Kantenseite des Werkstücks in Eingriff ist, manuell bewegt;
ein zweites Druckteil, das einer Rückfläche der Kantenseite des Werkstücks gegenüberliegt; und
ein Führungsdruckteil, das der Klebebandbefestigungs-Zielfläche des Werkstücks gegenüberliegt, **dadurch gekennzeichnet, dass**
das erste Druckteil (5) und das Führungsdruckteil (4) vor dem zweiten Druckteil (3) in Bewegungsrichtung der Montagevorrichtung (A) angeordnet sind, und dass
der Montagevorrichtungshauptkörper (1) mit einer Führungsnut (2) versehen ist, die extern an der Kantenseite (e) angebracht und mit ihr in Eingriff ist, wobei diese Führungsnut (2) einen schmalen eingeengten Teil (2a) am hinteren und vorderen Mittelteil aufweist und die Führungsnut (2) in Form einer Handtrommel geformt ist, die bei geweitetem hinteren und vorderen Teil geöffnet wird,
die untere Fläche (5) der Führungsnut (2) auf dem ersten Druckteil (5) gebildet ist,
eine der Nutinnenflächen (4) am vorderen Teil des eingeengten Teils (2a) auf dem Führungsdruckteil (4) gebildet ist und
die andere der Nutinnenflächen (3) am hinteren Teil des eingeengten Teils (2a) auf dem zweiten Druckteil (3) gebildet ist.

3. Klebebandbefestigungs-Montagevorrichtung nach Anspruch 2, wobei der Montagevorrichtungshauptkörper (1) durch ein Blockpaar ausgestaltet ist,
wobei eine Führungsnut (2), die extern an der Kantenseite (e) angebracht und mit ihr in Eingriff ist, in einem Bereich gebildet ist, in dem sich das Blockpaar gegenüber liegt, und
überdies durch Annähern und Trennen des Blockpaars ein Intervall der Führungsnut (2) angepasst werden kann.

4. Klebebandbefestigungs-Montagevorrichtung nach Anspruch 2, wobei der Montagevorrichtungshauptkörper (1) von einem Fluorharz gebildet ist.

5. Klebebandbefestigungs-Montagevorrichtung nach Anspruch 2, wobei die Fläche der Führungsnut (2) mit einem Fluorharz beschichtet ist.

6. Klebebandbefestigungs-Montagevorrichtung zum Einrollen eines vorstehenden Abschnitts eines Klebebands, das an einer Klebebandbefestigungs-Zielfläche eines Werkstücks entlang einer Kantenseite des Werkstücks befestigt ist und zum Befestigen des vorstehenden Abschnitts an dem Werkstück, wobei die Montagevorrichtung umfasst:
ein erstes Druckteil, das einem Oberteil einer Kantenseite des Werkstücks gegenüberliegt, das einen Montagevorrichtungshauptkörper entlang der Kantenseite, die mit der Kantenseite des Werkstücks in Eingriff ist, manuell bewegt;
ein zweites Druckteil, das einer Rückfläche der Kantenseite des Werkstücks gegenüberliegt; und
ein Führungsdruckteil, das der Klebebandbefestigungs-Zielfläche des Werkstücks gegenüberliegt, wobei
das erste Druckteil (5) und das Führungsdruckteil (4) vor dem zweiten Druckteil (3) in Bewegungsrichtung der Montagevorrichtung (A) angeordnet sind,
**dadurch gekennzeichnet, dass**
der Montagevorrichtungshauptkörper (1) mit einer Führungsnut (2) versehen ist, die extern an der Kantenseite (e) angebracht und mit ihr in Eingriff ist, wobei diese Führungsnut (2) einen schmalen eingeengten Teil (2a) am hinteren und vorderen Mittelteil aufweist, und die Führungsnut (2) in Form einer Handtrommel geformt ist, die bei geweitetem hinteren und vorderen Teil geöffnet wird,
die untere Fläche (5) der Führungsnut (2) auf dem ersten Druckteil (5) ausgeführt ist,
überdies, eine der Nutinnenflächen am vorderen Teil des eingeengten Teils in einer Führungsrolle (R) ausgeführt ist, die frei laufen kann,
die andere der Nutinnenflächen am Hinterteil des eingeengten Teils (2a) mit einer Hinterteilrolle (R) versehen ist, die frei laufen kann und
die Führungsrolle (R) und die Hinterteilrolle (R) hinten und vom in Bewegungsrichtung der Montagevorrichtung (A) verschoben werden, um die Kantenseite (e) des Werkstücks (F) von beiden Seiten einzuschließen und zu drücken.

7. Klebebandbefestigungs-Montagevorrichtung nach Anspruch 6, wobei der Montagevorrichtungshauptkörper (1) und beide Rollen (R) von einem Fluorharz gebildet sind.

8. Klebebandbefestigungs-Montagevorrichtung nach Anspruch 6, wobei die Fläche der Führungsnut (2) und die Flächen der beiden Rollen (R) mit einem Fluorharz beschichtet sind.

## Revendications

1. Procédé de fixation de bande adhésive pour replier une portion dépassant d'une bande adhésive fixée sur une face cible de fixation de bande adhésive d'une pièce à usiner le long d'un côté d'arête de la pièce à usiner et fixer la portion dépassant sur la pièce à usiner, le procédé comprenant les étapes consistant à :
engrener et guider un corps principal de dispositif de fixation dans et vers le côté d'arête de la pièce à usiner pour déplacer le corps principal de dispositif de fixation le long de la pièce à usiner ; et
replier la portion de bande dépassant de la pièce à usiner tout en exerçant une pression sur la portion de bande par le biais d'une première partie de pression prévue sur le corps principal de dispositif de fixation avant une partie supérieure du côté d'arête et, ensuite, pressant la portion de bande repliée contre une face arrière du côté d'arête par le biais d'une seconde partie de pression prévue sur le corps principal de dispositif de fixation, dans lequel
une partie de pression de guidage prévue sur le corps principal de dispositif de fixation est engrenée dans et agit sur une face cible de fixation de bande adhésive de la pièce à usiner,
**caractérisé en ce que**
cette partie de pression de guidage (4) et la seconde partie de pression (3) sont déplacées d'avant en arrière dans la direction de déplacement du dispositif de fixation (A) pour serrer et presser le côté d'arête (e) de la pièce à usiner (F) des deux côtés,
et **en ce que**
le corps principal de dispositif de fixation (1) est prévu avec une rainure de guidage (2) qui est extérieurement ajustée au et engrenée dans le côté d'arête (e), cette rainure de guidage (2) présente une partie étroite resserrée (2a) au niveau de la partie centrale avant et arrière, et la rainure de guidage (2) est formée dans la forme d'un tambour à main qui est ouvert avec sa partie avant et arrière évasée,
la face de fond (5) de la rainure de guidage (2) est faite dans la première partie de pression (5), et cette première partie de pression (5) est engrenée dans et agit sur la face cible de fixation de bande adhésive de la pièce à usiner (F),
l'une des faces intérieures (4) de la rainure au niveau de la partie frontale de la partie resserrée (2a) est faite dans la partie de pression de guidage (4).

2. Dispositif de fixation de bande adhésive pour enrouler une portion dépassant d'une bande adhésive fixée sur une face cible de fixation de bande adhésive d'une pièce à usiner le long d'un côté d'arête de la pièce à usiner et fixer la portion dépassant de la pièce à usiner, le dispositif de fixation comprenant :
une première partie de pression opposée à une partie supérieure d'un côté d'arête de la pièce à usiner, qui déplace manuellement un corps principal de dispositif de fixation le long du côté d'arête, étant engrené dans le côté d'arête de la pièce à usiner ;
une seconde partie de pression opposée à la face arrière du côté d'arête de la pièce à usiner ; et
une partie de pression de guidage opposée à la face cible de fixation de bande adhésive de la pièce à usiner, **caractérisé en ce que**
la première partie de pression (5) et la partie de pression de guidage (4) sont disposées en avant de la seconde partie de pression (3) dans la direction de déplacement du dispositif de fixation (A)
et **en ce que**
le corps principal de dispositif de fixation (1) est pourvu d'une rainure de guidage (2) extérieurement ajustée au et engrenée dans le côté d'arête (e), cette rainure de guidage (2) présente une partie étroite resserrée (2a) au niveau de la partie centrale avant et arrière, et la rainure de guidage (2) est formée dans la forme d'un tambour à main qui est ouvert avec sa partie avant et arrière évasée,
la face de fond (5) de la rainure de guidage (2) est formée sur la première partie de pression (5),
l'une des faces intérieures (4) de la rainure au niveau de la partie frontale de la partie resserrée (2a) est formée sur la partie de pression de guidage (4), et
l'autre des faces intérieures (3) de la rainure au niveau de la partie arrière de la partie resserrée (2a) est formée sur la seconde partie de pression (3).

3. Dispositif de fixation de bande adhésive selon la revendication 2, dans lequel le corps principal de dispositif de fixation (1) est conçu par une paire de blocs,
une rainure de guidage (2) à ajuster extérieurement au et engrener dans le côté d'arête (e) est formée au niveau d'une zone dans laquelle la paire de blocs sont opposés l'un à l'autre, et
en outre, en approchant et éloignant la paire de blocs, un intervalle de la rainure de guidage (2) peut être ajusté.

4. Dispositif de fixation de bande adhésive selon la revendication 2, dans lequel le corps principal de dispositif de fixation (1) est formé en une résine fluorée.

5. Dispositif de fixation de bande adhésive selon la revendication 2, dans lequel la surface de la rainure de guidage (2) est revêtue d'une résine fluorée.

6. Dispositif de fixation de bande adhésive pour enrouler une portion dépassant d'une bande adhésive fixée sur une face cible de fixation de bande adhésive d'une pièce à usiner le long d'un côté d'arête de la pièce à usiner et fixer la portion dépassant de la pièce à usiner, le dispositif de fixation comprenant :
une première partie de pression opposée à une partie supérieure d'un côté d'arête de la pièce à usiner, qui déplace manuellement un corps principal de dispositif de fixation le long du côté d'arête, étant engrené dans le côté d'arête de la pièce à usiner ;
une seconde partie de pression opposée à une face arrière du côté d'arête de la pièce à usiner ; et
une partie de pression de guidage opposée à la face cible de fixation de bande adhésive de la pièce à usiner, dans lequel
la première partie de pression (5) et la partie de pression de guidage (4) sont disposées en avant de la seconde partie de pression (3) dans la direction de déplacement du dispositif de fixation (A)
**caractérisé en ce que**
le corps principal de dispositif de fixation (1) est pourvu d'une rainure de guidage (2) extérieurement ajustée au et engrenée dans le côté d'arête (e), cette rainure de guidage (2) présente une partie étroite resserrée (2a) au niveau de la partie centrale avant et arrière, et la rainure de guidage (2) est formée dans la forme d'un tambour à main qui est ouvert avec sa partie avant et arrière évasée,
la face de fond (5) de la rainure de guidage (2) est faite dans la première partie de pression (5),
en outre, l'une des faces intérieures de la rainure au niveau de la partie frontale de la partie resserrée est faite dans un rouleau de guidage (R) qui peut rouler librement,
l'autre des faces intérieures de la rainure au niveau de la partie arrière de la partie resserrée (2a) est pourvue d'un rouleau de partie arrière (R) qui peut rouler librement, et
le rouleau de guidage (R) et le rouleau de partie arrière (R) sont déplacés d'avant en arrière dans la direction de déplacement du dispositif de fixation (A) pour serrer et presser le côté d'arête (e) de la pièce à usiner (F) des deux côtés.

7. Dispositif de fixation de bande adhésive selon la revendication 6, dans lequel le corps principal de dispositif de fixation (1) et les deux rouleaux (R) sont formés en une résine fluorée.

8. Dispositif de fixation de bande adhésive selon la revendication 6, dans lequel la surface de la rainure de guidage (2) et les surfaces des deux rouleaux (R) sont revêtues d'une résine fluorée.
